# EUROPEAN PATENT APPLICATION

(11) **EP 4 231 046 A1**
(43) Date of publication of application: **23.08.2023**
(21) Application number: 22157339.7
(22) Date of filing: 17.02.2022
(51) Int. Cl.: G01S 7/481, B60R 11/04, G01S 17/931, G03B 11/04, G01S 13/931, B60R 11/00

(54) **SYSTEM FOR MEASURING A DISTANCE TO AN OBJECT FROM BEHIND A TRANSPARENT ELEMENT**

(71) Applicant: XenomatiX NV, 3001 Heverlee (BE)
(72) Inventor: PAESEN, Rik, B-3590 Diepenbeek (BE); MUDRY, Emeric, B-1400 Nivelles (BE); PORTIER, Benjamin, B-1160 Auderghem (BE)
(74) Representative: Beck, Michaël Andries T.

(57) **Abstract**

The invention concerns a system (100) for measuring a distance to an object across a transparent element (250), comprising: a light source (110) projecting a light pattern onto the object, through the transparent element (250); a detector (120) detecting a reflection of the light pattern, arriving from the object through the transparent element (250); and processing means (130) configured to determine a position and/or a distance of the object on the basis of the detected reflection. The light source (110) and the transparent element are in such a relative position that the first direction is not normal to the transparent element (250). Stray light includes light scattered by the light source (100) outside the projected light pattern and/or a portion of the projected light pattern reflected off of a proximal surface of the transparent element (250). The system (100) comprises a glossy surface (160) below the detector (120), in an optical path of the stray light, oriented so as to reflect the stray light outside a field of view of the detector (120).

## Description

### Field of the Invention

The present invention pertains to the field of systems for determining a distance to an object, including time-of-flight based sensing systems and triangulation-based sensing systems, whereby the measurement is effected through a transparent element. More in particular, the invention pertains to vehicular systems for determining a distance to an object in the vicinity or the path of the vehicle. The transparent element may for example be the windshield of the vehicle or a protective cover of the system.

### Background

Vehicular distance measurement systems are known and used in applications such as park assist, active suspension systems, advanced driver assistance systems, and self-driving cars. A specific type of detection system is disclosed in detail in international patent application publication no. WO 2015/004213 A1 in the name of the present applicant. Another specific type of detection system is described for example in international patent application publication no. WO 2017/068199 A1 in the name of the present applicant.

It is clear from both cited applications, that it is extremely important to detect the largest possible proportion of the reflected light at the detector of such a system, while minimizing any noise contributions, to obtain the desired operating range and accuracy. Where such systems employ sensing (e.g., triangulation or LIDAR sensing) through the windshield of the vehicle, refraction of the signals by the windshield and reflections of the emitted signal on the inside of the windshield are known sources of inaccuracy in the sensing process.

Hence, there is a need for systems of the above-mentioned type that can be deployed inside vehicles.

Known solutions include the provision of optical guides between the sensing system and the windshield and elements to obstruct and dampen the reflections.

European patent application publication no. EP3316000A1 in the name of the present applicant discloses a system, in a vehicle having a windshield, for measuring a distance to an object outside said vehicle. The system comprises: a light source for projecting a light pattern in a first direction onto said object; a detector for detecting at least a partial reflection of said light pattern, arriving from said object in a second direction; and processing means configured to determine a position and/or a distance of said object on the basis of said detected reflection. It further comprises a transparent prism, shaped in such a way that it can be placed with a first side in contact with the windshield and a second side directed to the light source and the detector, whereby the second side presents a smaller angle of incidence towards the first and second direction than the windshield.

US patent application publication no. US20050156102A1 discloses an optical sensor arrangement, which, in connection with the new sensor arrangement, is protected against interfering environmental influences by a transparent cover. For the avoidance of interfering reflections, a baffle with lamellae oriented in the direction of the emitted and reflected light is provided between the cover and the transmitting-receiving device. The lamellae represent an obstacle for the light reflected in the interior of the vehicle on the windshield, and thus cause a damping of the interfering reflections in the interior of the vehicle. For the increasing of the damping effect, the lamellae are additionally embodied light absorbing, which can be effectuated through a dark color and a dull or mat embodied surface.

A stray light shield for an in-vehicle camera module is also known from US9487159B2. It is formed of a polymeric material, preferably a dark or light absorbing or non-reflecting plastic or polymeric material or the like. Similarly, the glare shield of US20210001784A1 is black to reduce reflection of stray light incident thereon and may also include ribs or undulations or structure to limit the stray light from reflecting toward and being incident at the lens of the camera. The vehicular camera system of US10787125B2 provides a stray light shield, optionally including ridges, to reduce capture by the camera lens of stray light or glare that may, for example, be reflected off of the windshield.

Despite the considerable attenuation provided by the above-mentioned solutions, some stray reflections may still reach the sensor. Accordingly, there is still a need for better solutions for in-vehicle optical sensors.

### Summary

According to an aspect of the present invention, there is provided a system for measuring a distance to an object on the other side of a transparent element, the system comprising:
- a light source for projecting a light pattern in a first direction onto the object, through the transparent element;
- a detector for detecting at least a partial reflection of the light pattern, arriving from the object in a second direction through the transparent element; and
- processing means configured to determine a position and/or a distance of the object on the basis of the detected reflection;
wherein the light source and the transparent element are in such a relative position that the first direction is not normal to the transparent element;
the system exhibiting, in use, a presence of stray light comprising light scattered by the light source outside the projected light pattern and/or a portion of the projected light pattern reflected off of a proximal surface of the transparent element.

The system further comprises a glossy surface arranged below the detector, arranged in an optical path of the stray light; whereby the glossy surface is oriented so as to direct a reflection of the stray light off of the glossy surface outside a field of view of the detector.

The transparent element is an element through which a portion of incident light (in particular light travelling in a direction close to the normal to the surfaces of incidence and exit) will travel without significant distortion. The transparent element may in particular be an element with parallel surfaces, such as for example a pane made of glass or transparent plastic, optionally provided with a coating or film on one or both of its surfaces and optionally provided with a darkening or coloring pigment in all or part of its volume. The transparent element may in particular be a windshield or another transparent pane of a vehicle.

The hitherto known solutions for dealing with stray light deploy baffles or shields whose surfaces are designed to minimize reflection (by using light absorbing colors or surface textures) and/or diffuse reflections (by using rough surfaces, lamellae, ridges). Despite the considerable attenuation provided by these solutions, some stray reflections will still reach the sensor. The present invention is based *inter alia* on the insight of the inventors that by avoiding the diffuse Lambertian reflectors of the prior art, better control can be gained over the destination of the stray light. In particular, by placing a glossy (i.e., smooth or polished, and hence optically reflective) surface in the path of the unwanted stray light, said light can be deflected through specular reflections towards any area where it is known not to interfere with the detector.

In an embodiment of the system according to the present invention, the glossy surface is oriented so as to direct the reflection of the stray light into an area below the detector.

The detector may be part of an integrated module, which may for instance also comprise the light source and the processing means. Only the field of view of the detector must be kept free from stray light. The area below the detector may contain the remainder of the module, or any other equipment not affected by stray light. This thus constitutes a "safe" target for the deliberately reflected stray light.

The inventors have found that using a judiciously shaped and oriented polished surface for the bracket supporting the module is an efficient way to reduce the amount of stray light that reaches the detector.

In a particular embodiment, the glossy surface comprises a concave surface.

As the stray light does not appear in the form of a single, focused light beam, different portions of the stray light may require slightly different angles of reflection in order to be kept away from the field of view of the detector. The inventors have found that this requirement can be met by a judiciously shaped concave surface.

The inventors have found that a glossy surface formed by a cylindrical reflector extending a polished bracket yields excellent results. This makes this solution a preferred option in vehicles that have sufficient space to host a system of this type.

In an embodiment of the system according to the present invention, the glossy surface is oriented so as to direct the reflection of the stray light towards the proximal surface of the transparent element under such an angle that a further reflection of the stray light off of the proximal surface of the transparent element is directed outside the field of view of the detector.

The inventors have found that it is advantageous to reflect the stray light back towards the transparent element, such that a large part of the stray light leaves the detector area through the transparent element. The angle of reflection must be chosen appropriately such that the remaining portion of the stray light that is reflected by the transparent element does not enter the field of view of the detector.

This effect can be achieved with a planar glossy surface, which makes this solution a preferred option in vehicles where the available space is limited.

In a particular embodiment, the glossy surface is oriented so as to direct the further reflection of the stray light into an area below the detector.

The area below the detector may contain the remainder of the module, or any other equipment not affected by stray light. This thus constitutes a "safe" target for the remaining portion of the stray light that is reflected by the transparent element.

In another particular embodiment, the glossy surface is oriented so as to direct the further reflection of the stray light back to the glossy surface, whereby a subsequent reflection off of the glossy surface is directed outside the field of view of the detector.

In this embodiment, the glossy surface is oriented so as to cause the stray light to "bounce" back and forth between the transparent element and the glossy surface two or more times. It is an advantage of this embodiment that a part of the stray light leaves the detector area through the transparent element at each "bounce", while the ever diminishing remaining amount of stray light is kept away from the detector as long as possible.

In an embodiment of the system according to the present invention, at least a part of the glossy surface is positioned at an angle of 1°-5° relative to the optical axis of the light source.

In an embodiment of the system according to the present invention, the glossy surface has a surface roughness Rₐ ≤ 10 nm.

The inventors have found that this level of surface roughness provides excellent specular reflections in the context of the present invention.

In an embodiment of the system according to the present invention, the glossy surface is mirror polished.

The inventors have found that a mirror polished surface provides excellent specular reflections in the context of the present invention.

In an embodiment of the system according to the present invention, the glossy surface is made of one or more of a polymer, copper, and aluminum.

Plastics and metals are particularly suited for producing the low degree of surface roughness and the resulting high reflectivity required by the present invention. The listed metals further combine mechanical strength with good heat dissipation properties.

In an embodiment of the system according to the present invention, the glossy surface is part of a bracket supporting at least one of the light source and the detector.

This embodiment allows for a compact system design allowing efficient installation, for example inside a vehicle.

In an embodiment of the system according to the present invention, the transparent element is a protective cover.

In an embodiment, the system according to the present invention is configured to be mountable in the interior of a vehicle, and the transparent element is a windshield or a transparent pane of said vehicle.

In a particular embodiment, the transparent element is a windshield positioned at an angle of 50°-70° relative to the vertical.

The inventors have found that the presently disclosed system is particularly suitable for use in vehicles with a windshield positioned at angles in this range.

According to an aspect of the present invention, there is provided an automotive vehicle comprising the system described above.

The technical effects and advantages of embodiments of the vehicle according to the present invention correspond, mutatis mutandis, to those of the corresponding embodiments of the system according to the present invention.

### Brief Description of the Figures

These and other aspects and advantages of the present invention will now be described in more detail with reference to the accompanying drawings, in which:
- Figure 1 schematically illustrates the problem of stray light entering the detector, when a diffusely reflecting bracket is used;
- Figure 2 schematically illustrates a system according to a first embodiment of the present invention; and
- Figure 3 schematically illustrates a system according to a second embodiment of the present invention.

Throughout the figures, like references have been used to designate the same or corresponding elements.

### Detailed Description of Embodiments

As stated above, the system according to the present invention is conceived to operate in relation to a transparent element, such as for example a pane made of glass or transparent plastic. Without loss of generality, reference will hereinafter be made to system **100**that is mountable in the interior of a vehicle, whereby the windshield **250** of the vehicle constitutes the aforementioned transparent element. The inner surface of the windshield **250** constitutes the proximal surface of the transparent element. The system is configured for measuring a distance to an object on the other side of the windshield **250,** i.e., outside the vehicle. These systems may be used in automotive applications such as park assist, active suspension systems, advanced driver assistance systems, and self-driving cars.

In particular, the distance measurement is performed through the windshield **250.** The system **100** comprises a light source **110** for projecting a light pattern in a first direction onto the object, which may for example comprise a laser source arranged to project a pattern of spots (e.g., a VCSEL array, or a laser/grating combination). The system **100** further comprises a detector **120** for detecting at least a partial reflection of the light pattern, arriving from the object in a second direction, which may for example comprise a CMOS sensor array.

The windshield **250** may have a refractive index in the range of 1.48-1.55. The light source **110** and the windshield **250** are in such a relative position that the first direction (direction of projection of the pattern) is not normal to the windshield **250.** As a result of that relative position, the system **100** may exhibit, in use, a presence of stray light comprising a portion of the projected light pattern reflected off of an inner surface of the windshield **250.** It is noted that even in the presence of a lamination or a coating aimed at reducing reflections from the windshield, such reflections cannot be completely avoided. Another potential source of stray light is light scattered by the light source **110** outside the projected light pattern.

The system **100** further comprises processing means **130** configured to determine a position and/or a distance of the object on the basis of the detected reflection. The processing means **130** may be implemented in dedicated hardware (e.g., ASIC), configurable hardware (e.g., FPGA), programmable components (e.g., a DSP or general purpose processor with appropriate software), or any combination thereof. The same component(s) may also include other functions.

The light source **110**, the detector **120,** and the processing means **130** may cooperate to obtain a distance measurement in a variety of ways that are known to the skilled person. Without limitation, the distance measurement may be obtained by analyzing in the processing means **130** the displacement of individual laser spots in a pattern projected by the light source **110** and detected by the detector **120,** as disclosed in detail in international patent application publication no. WO 2015/004213 A1 in the name of the present applicant. Still without limitation, the distance measurement may also be obtained by assessing in the processing means **130** the round-trip time-of-flight of a light (e.g., laser) pulse projected by the light source **110** and detected by the detector **120,** as described for example in the international patent application publication no. WO 2017/068199 A1 in the name of the present applicant. The cited applications are to be considered as incorporated by reference for the purpose of providing further details regarding the processing that may be applied to perform position and/or distance determination. It is clear from both cited applications, that it is extremely important to detect the largest possible proportion of the reflected light at the detector **120,** while minimizing any noise contributions.

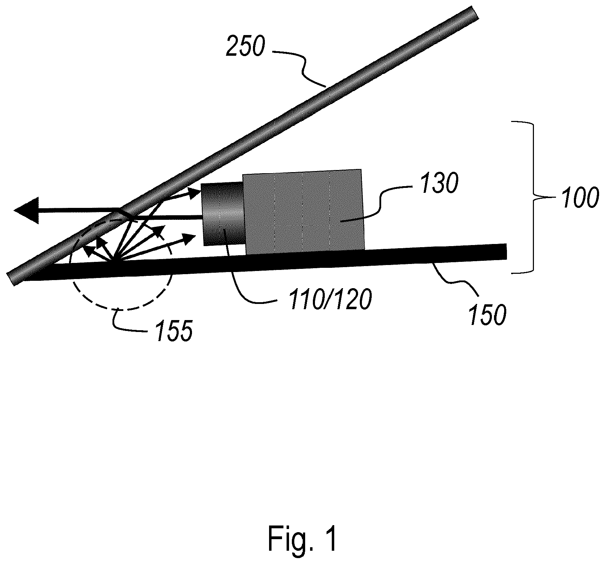

Figure 1 schematically illustrates the problem of stray light entering the detector **120,** when a diffusely reflecting bracket **150** is used.

A representative ray of light emanating from the light source **110** is shown in Figure 1 as a thick arrow, a major portion of which passes through the windshield **250** (undergoing refraction at the air/glass interfaces).

A portion of the light projected by the light source **110** is reflected at the interface between the air inside the vehicle and the windshield material (i.e., at the inner surface of the windshield) under an angle determined by the relative orientation of the windshield **250** and the direction of the light projection by the light source **110**, in accordance with the law of reflection. Assuming a typical arrangement of the light source **110** (nearly horizontal direction of projection) and the windshield **250** (tilted inward at an angle of 50°-70° relative to the vertical), the reflection will be in a downward direction, as shown in Figure 1 for the representative ray by a slightly thinner line. The same applies to any off-axis scattered light emanating from the light source (not illustrated in Figure 1), apart from the portion that is originally angled so far downward that it misses the windshield (not illustrated in Figure 1). The stray light (i.e. the portion of the projected light pattern and of the scattered light that is reflected by the windshield **250,** as well as any scattered light that is directed downward) impinges on the bracket **150** on which the light source **110** and detector **120** are arranged.

Conventionally, this bracket **150** is provided in a dark color with a diffuse texture, so as to cause only a small amount of reflection. However, as shown in Figure 1, the Lambertian nature of this reflection in the reflection zone **155** causes a small but non-negligeable amount of stray light to be reflected back towards the detector **120,** where it interferes with the distance-measuring method.

The present invention resolves this problem by providing a glossy surface arranged below the detector, arranged in an optical path of the stray light. The glossy surface is oriented so as to direct a specular reflection of the stray light off of the glossy surface outside the field of view of the detector.

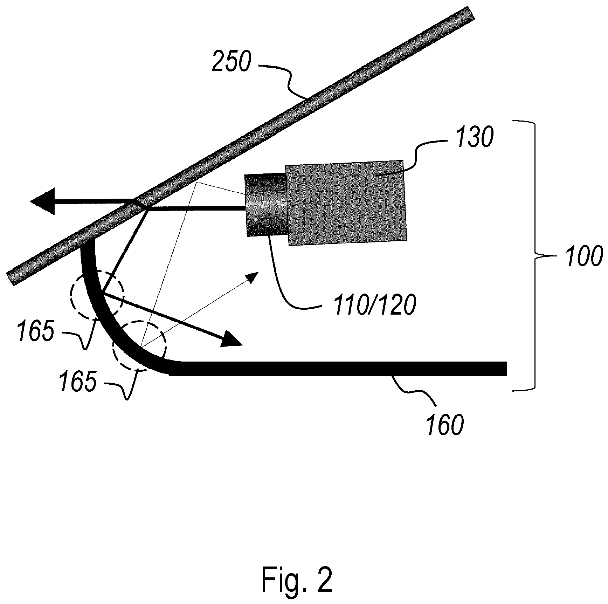

Figure 2 schematically illustrates a system according to a first embodiment of the present invention. In this embodiment, at least part of the bracket is replaced by or provided with a glossy surface **160.**

As before, a representative ray of light emanating from the light source **110** is shown in Figure 2 as a thick arrow, a major portion of which passes through the windshield **250** (undergoing refraction at the air/glass interfaces).

A portion of the light projected by the light source **110** is reflected at the interface between the air inside the vehicle and the windshield material (i.e., at the inner surface of the windshield) under an angle determined by the relative orientation of the windshield **250** and the direction of the light projected by the light source **110**, in accordance with the law of reflection. Assuming a typical arrangement of the light source **110** (nearly horizontal direction of projection) and the windshield **250** (tilted inward at an angle of 50°-70° relative to the vertical), the reflection will be in a downward direction, as shown in Figure 2 for the representative ray by a slightly thinner line. The same applies to any off-axis scattered light emanating from the light source (illustrated as an even thinner line in Figure 2), apart from the portion that is originally angled so far downward that it misses the windshield (not illustrated in Figure 2). The stray light (i.e. the portion of the projected light pattern and of the scattered light that is reflected by the windshield **250,** as well as any scattered light that is directed downward) impinges on the glossy surface **160.**

In the illustrated embodiment, the glossy surface **160** is oriented so as to direct the reflection of the stray light into an area below the detector **120.** As the detector **120** of the illustrated embodiment is part of an integrated module, which also comprises the light source **110** and the processing means **130,** the area below the module **110/120/130** does not contain any components affected by stray light and thus constitutes a "safe" target for the deliberately reflected stray light.

In the illustrated embodiment, the glossy surface **160** comprises a concave surface (shown on the left-hand side of Figure 2). This allows different portions of the stray light to be reflected under slightly different angles of reflection at the respective specular reflection sites **165,** always away from the field of view of the detector **120.**

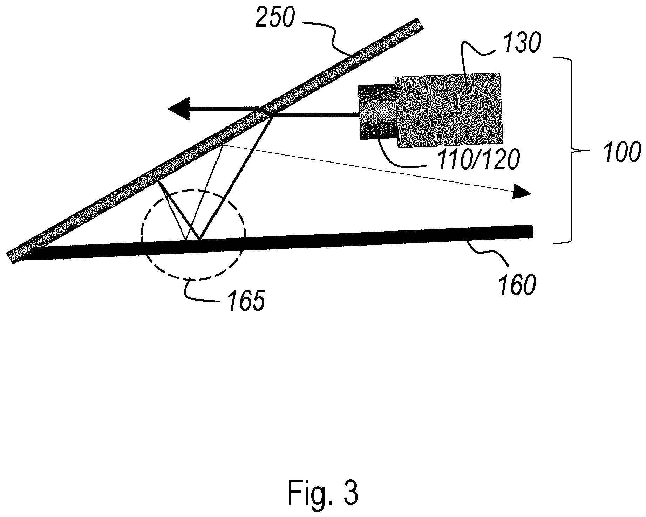

Figure 3 schematically illustrates a system according to a second embodiment of the present invention.

As before, a representative ray of light emanating from the light source **110** is shown in Figure 3 as a thick arrow, a major portion of which passes through the windshield **250** (undergoing refraction at the air/glass interfaces).

A portion of the light projected by the light source **110** is reflected at the interface between the air inside the vehicle and the windshield material (i.e., at the inner surface of the windshield) under an angle determined by the relative orientation of the windshield **250** and the direction of the light projected by the light source **110**, in accordance with the law of reflection. Assuming a typical arrangement of the light source **110** (nearly horizontal direction of projection) and the windshield **250** (tilted inward at an angle of 50°-70° relative to the vertical), the reflection will be in a downward direction, as shown in Figure 3 for the representative ray by a slightly thinner line. The same applies to any off-axis scattered light emanating from the light source (not illustrated in Figure 3), apart from the portion that is originally angled so far downward that it misses the windshield (not illustrated in Figure 3). The stray light (i.e. the portion of the projected light pattern and of the scattered light that is reflected by the windshield **250,** as well as any scattered light that is directed downward) impinges on the glossy surface **160.**

In the illustrated embodiment, the glossy surface **160** is oriented so as to direct the reflection of the stray light back towards the inner surface of the windshield **250.** This has the advantage that a large part of the stray light reflected off of the glossy surface **250** leaves the vehicle through the windshield.

In addition, the reflection is effected under such an angle that a further reflection of the stray light off of the inner surface of the windshield **250** is directed outside the field of view of the detector **120.**

In particular, the glossy surface **160** may be oriented so as to direct the further reflection of the stray light back to the glossy surface **160,** whereby a subsequent reflection off of the glossy surface is directed outside the field of view of the detector. In this way, the stray light may be caused to "bounce" back and forth between the windshield and the glossy surface a number of times at respective specular reflection sites **165.** A large part of the stray light leaves the vehicle through the windshield **250** at each "bounce", while the ever diminishing reflections are kept away from the detector **120** as long as possible. The skilled person can easily determine the number of "bounces" resulting from any envisioned orientation of the glossy surface by using conventional ray tracing tools.

Moreover, the glossy surface **160** may be oriented so as to direct the further reflection of at least some of the stray light into an area below the detector **120,** which, for reasons already elucidated above, may constitute a "safe" target for the remaining portion of the stray light that is reflected by the windshield **250.**

The described effects may be obtained by providing a planar glossy surface **160** (e.g., part of the bracket holding the source/detector module) which is tilted slightly downwards in the forward direction, relative to the optical axis of the light source **110**. The angle of tilt may be in the range of 0°-5°, more preferably in the range of 0.5°-1.5°.

The glossy surface **160** should be sufficiently smooth to exhibit specular reflections and no (or a negligeable amount of) Lambertian reflection. This level of smoothness can be found in "mirror polished" surfaces. The glossy surface **160** preferably has a surface roughness of Rₐ ≤ 20 nm, more preferably Rₐ ≤ 10 nm, and most preferably Rₐ ≤ 5 nm.

The glossy surface **160** may be made of a polymer (plastic), including but not limited to polyethylene, polypropylene, acrylonitrile butadiene styrene, polymethylmethacrylate, and polycarbonate, or combinations thereof.

The glossy surface **160** may be made of a metal, including but not limited to copper and aluminum and their alloys. These combine mechanical strength with good heat dissipation properties.

The glossy surface **160** may be part of a bracket supporting at least one of the light source **110** and the detector **120** - in particular, it may be part of a bracket supporting an integrated module including the light source **110**, the detector **120,** and the processing means **130.** The material of the bracket may be chosen on the basis of the mechanical demands. The glossy surface **160** may be in one part with the bracket, and thus made of the same material, provided that said material can be made to meet the above-mentioned smoothness requirements. Otherwise, the glossy surface **160** may be obtained by placing a suitable coating or lamination on top of an otherwise unsuitable material.

The present application also pertains to an automotive vehicle comprising the system **100** described above, whereby the orientation of the elements of the system are placed in the appropriate spatial relationship to the windshield of the vehicle in order to obtain the described reflection of the stray light.

While the invention has been described hereinabove with reference to separate system and method embodiments, this was done for clarifying purposes only. The scope of the invention is not limited to these embodiments, but is defined by the accompanying claims.

## Claims

1. A system (100) for measuring a distance to an object on the other side of a transparent element (250), said system comprising:
- a light source (110) for projecting a light pattern in a first direction onto said object, through said transparent element (250);
- a detector (120) for detecting at least a partial reflection of said light pattern, arriving from said object in a second direction through said transparent element (250); and
- processing means (130) configured to determine a position and/or a distance of said object on the basis of said detected reflection;
wherein said light source (110) and said transparent element are in such a relative position that said first direction is not normal to said transparent element (250);
the system exhibiting, in use, a presence of stray light comprising light scattered by said light source (100) outside said projected light pattern and/or a portion of said projected light pattern reflected off of a proximal surface of said transparent element (250);
**characterized in that** said system (100) further comprises a glossy surface (160) arranged below said detector (120), arranged in an optical path of said stray light;
**and in that** said glossy surface (160) is oriented so as to direct a reflection of said stray light off of said glossy surface (160) outside a field of view of said detector (120).

2. The system (100) according to claim 1, wherein said glossy surface (160) is oriented so as to direct said reflection of said stray light into an area below said detector (120).

3. The system (100) according to claim 2, wherein said glossy surface (160) comprises a concave surface.

4. The system (100) according to claim 1, wherein said glossy surface (160) is oriented so as to direct said reflection of said stray light towards said proximal surface of said transparent element (250) under such an angle that a further reflection of said stray light off of said inner surface of said transparent element (250) is directed outside said field of view of said detector (120).

5. The system (100) according to claim 4, wherein said glossy surface (160) is oriented so as to direct said further reflection of said stray light into an area below said detector (120).

6. The system (100) according to claim 4, wherein said glossy surface (160) is oriented so as to direct said further reflection of said stray light back to said glossy surface (160), whereby a subsequent reflection off of said glossy surface (160) is directed outside said field of view of said detector (120).

7. The system (100) according to any of the preceding claims, wherein at least a part of said glossy surface (160) is positioned at an angle of 1°-5° relative to an optical axis of the light source (110).

8. The system (100) according to any of the preceding claims, wherein said glossy surface (160) has a surface roughness Rₐ ≤ 10 nm.

9. The system (100) according to any of the preceding claims, wherein said glossy surface (160) is mirror polished.

10. The system (100) according to any of the preceding claims, wherein said glossy surface (160) is made of one or more of a polymer, copper, and aluminum.

11. The system (100) according to any of the preceding claims, wherein said glossy surface (160) is part of a bracket supporting at least one of said light source (110) and said detector (120).

12. The system (100) according to any of the preceding claims, wherein said transparent element (250) is a protective cover.

13. The system (100) according to any of claims 1-11, configured to be mountable in the interior of a vehicle, wherein said transparent element is a windshield or a transparent pane of said vehicle.

14. The system (100) according to any of the preceding claims, wherein said transparent element (250) is a windshield positioned at an angle of 50°-70° relative to the vertical.

15. An automotive vehicle comprising the system (100) according to claim 13 or claim 14.
